(19) Europäisches Patentamt
European Patent Office
Office européen des brevets

(11) Publication number: 0 036 786 B2

(12) NEW EUROPEAN PATENT SPECIFICATION

(45) Date of publication of the new patent specification: 09.05.90

(51) Int. Cl.$^5$: C 04 B 35/48

(21) Application number: 81301292.9

(22) Date of filing: 25.03.81

# (54) Zirconia ceramics and a method of producing the same.

(30) Priority: 26.03.80 JP 37522/80
17.02.81 JP 20833/81

(43) Date of publication of application:
30.09.81 Bulletin 81/39

(45) Publication of the grant of the patent:
24.10.84 Bulletin 84/43

(45) Mention of the opposition decision:
09.05.90 Bulletin 90/19

(84) Designated Contracting States:
DE FR GB

(56) References cited:
DE-A-1 903 597
DE-A-2 231 539
DE-A-2 810 134
JP-A-794 913
JP-A-7 934 309
JP-A-78 139 595
US-A-3 432 314
US-A-3 518 100
US-A-3 862 283
US-A-3 957 500

The file contains technical information submitted after the application was filed and not included in this specification

(73) Proprietor: NGK INSULATORS, LTD.
2-56, Suda-cho, Mizuho-ku
Nagoya-shi, Aichi 467 (JP)

(72) Inventor: Otagiri, Tadashi
34, Takemi-Cho 1-chome Mizuho-Ku
Nagoya City (JP)
Inventor: Watanabe, Tetsuo
50, Shinonokaze 2-chome Midori-Ku
Nagoya City (JP)
Inventor: Mase, Syunzo
435, Aza-Motokinogo Ohaza-Tobishima-shinden
Tobishima-Mura Ama-Gun Aichi Prefecture (JP)

(74) Representative: Paget, Hugh Charles Edward et al
MEWBURN ELLIS & CO. 2/3 Cursitor Street
London EC4A 1BQ (GB)

(56) References cited:
AMERICAN CERAMIC BULLETIN, Vol. 58, No. 6, 1979 C.E. SCOTT et al. "Effect of Laundering and Milling on the Sintering Behavior of Stabilized ZrO2 Powders pages 587 to 590
Journal of Material Science, vol. 12, 1977, pp. 2421-2426

EP 0 036 786 B2

(56) References cited:

Science of Sintering, vol. 10, no. 3, pp. 205-216, 1978

U.S. Department of Commerce, National Technical Information Service Technical Report AD-A-057 240, July 1978, F.F. Lange
American Ceramic Society Bulletin, vol. 55, no. 8, 1976, Rieth et al., pp. 717-721 and 727

Journal of Material Science, vol. 14, 1979, K.C. Radford et al., pp.59-65

Ceramurgia International, vol. 1, no. 3, Haberko, Ciesla, Pron, 1975

Journal of Material Science, vol. 10, 1979, Scott, pp. 1527-1535

Journal of the American Ceramic Society, vol. 61, nos. 1 and 2, Stubican et al., pp. 17-21
Trans. J. Br. Ceram. Soc. 73(3), Srivastava et al., 1974, pp. 85-91

P. Pascal, Nouveau Traité de chimie minérale, vol. IX, 1963, pp. 467-469

**Description**

The present invention relates to $ZrO_2$—$Y_2O_3$ zirconia ceramics having a high strength and a high resistance against deterioration in strength due to use for a long period of time within a specifically limited temperature range, and to a method for producing such zirconia ceramics.

There have hitherto been known, as $ZrO_2$—$Y_2O_3$ zirconia ceramics, fully stabilized zirconia ceramics consisting only of a cubic phase and partially stabilized zirconia ceramics consisting of a cubic phase and a monoclinic phase, both of which are used as heat resistant materials and as solid electrolytes. The fully stabilized zirconia ceramics are stable within a temperature range of from room temperature to about 1,500°C and undergo very little deterioration in strength due to use for a long period of time. However, the fully stabilized zirconia ceramics have a low strength, and, for example, are apt to be very easily broken due to thermal shock during use as solid electrolytes for oxygen sensors, which are used for detecting the oxygen concentration in the exhaust gas of a vehicle. On the other hand, the partially stabilized zirconia ceramics consisting of a cubic phase and a monoclinic phase have a higher strength and thermal shock resistance than the fully stabilized zirconia ceramics, but the partially stabilized zirconia ceramics deteriorate very noticeably in strength with lapse of time within a specifically limited temperature range of from 200°C to 300°C, and when such zirconia ceramics are used for a long period of time at a temperature within the above described range, a large number of fine cracks are formed on the surface of the ceramics to make the ceramics water absorptive and adversely affect their strength, resulting in breakage of the ceramics.

The reason for the breakage of the partially stabilized zirconia ceramics may be as follows. Although the partially stabilized $ZrO_2$—$Y_2O_3$ zirconia ceramics consist of a cubic phase and a monoclinic phase at room temperature, they consist of a cubic phase and a tetragonal phase at a firing temperature of about 1,500°C. Therefore, the crystal grains of the tetrogonal phase at the firing temperature change their crystal phase from a tetragonal phase into a monoclinic phase at about 500°C during cooling from about 1,500°C to room temperature, and an excess stress is caused in the ceramics due to the volume change caused by the phase transformation, and a large amount of fine cracks are formed in the crystal grains and grow therein during use for a long period of time at a temperature within the range of from 200°C to 300°C, resulting in breakage of the ceramics. Furthermore, when the partially stabilized zirconia ceramics consisting of a cubic phase and a monoclinic phase are repeatedly heated and cooled between room temperature and about 800°C, the ceramics exhibit different thermal expansion curves in the heating and cooling directions due to the phase transformation between the monoclinic phase and the tetragonal phase caused at about 500°C, that is exhibit a so-called hysteresis cueve, and moreover when the ceramics are heated from room temperature and then cooled to the original room temperature, the ceramics have different dimensions before and after the heating, and therefore the ceramics cannot maintain accurate dimensions.

The present invention aims to provide zirconia ceramics which is free from the above described drawbacks of the conventional partially stabilized zirconia ceramics, has a high strength and an improved resistance against deterioration of strength with lapse of time within a specifically limited temperature range of from 200°C to 300°C, is free from the hysteresis phenomenon due to the phase transformation in the thermal expansion curve from room temperature to about 800°C, and further can maintain a high dimensional accuracy at room temperature.

Accordingly, the present invention is one aspect provides zirconia ceramics comprising $ZrO_2$ and $Y_2O_3$ in a molar ratio of $Y_2O_3/ZrO_2$ of 2/98—7/93, and consisting of crystal grains having a mixed phase comprising a tetragonal phase and a cubic phase, or having a phase comprising a tetragonal phase, the average size of the crystal grains being not larger than 2 μm.

The invention in another aspect provides a method of producing zirconia ceramics, characterized by comprising mixing zirconium oxide having a crystallite size of not larger than 100 nm (1,000 Å) or amorphous zirconium oxide with an yttrium compound in a mixing ratio, calculated as oxide, of $Y_2O_3/ZrO_2$ of 2/98—7/93, moulding the mixture into a moulded article, and firing the moulded article at a temperature within the range of 1,000—1,550°C, to thereby obtain zirconia ceramics consisting of crystal grains having a mixed phase comprising a tetragonal phase and a cubic phase or having a phase comprising a tetragonal phase, the average size of the said crystal grains being not larger than 2 μm.

In the following description, the term "zirconia ceramics consisting of crystal grains having a mixed phase comprising a tetragonal phase and a cubic phase" may be merely referred to as "zirconia ceramics having a mixed crystal phase comprising a tetragonal phase and a cubic phase", and the term "zirconia ceramics consisting of crystal grains having a phase comprising a tetragonal phase" may be merely referred to as "zirconia ceramics having a crystal phase comprising a tetrogonal phase."

The present invention is based on the discovery that, when crystal grains constituting $ZrO_2$—$Y_2O_3$ zirconia ceramics have an average grain size of not larger than a specifically limited value, a tetragonal phase, which is not stable at a temperature of not higher than about 500°C due to the phase transformation at about 500°C, can be stably maintained within a temperature range of from 500°C to room temperature without causing phase transformation from the tetragonal phase into a monoclinic phase; that is, when the crystal grains constituting the zirconia ceramics have a mixed phase comprising a cubic phase and a tetragonal phase or have a phase comprising a tetragonal phase, the zirconia ceramics have a very high strength, undergo very little deterioration in strength with lapse of time at a temperature within a specifically limited temperature range and are free from dimensional change due to heating and cooling within the temperature range of from room temperature to 800°C. The present invention is also based on the discovery that, in the production of the above described zirconia ceramics, it is a most important factor that a moulded article to be fired into the zirconia ceramics according to the present invention is constituted of zirconium oxide having a crystallite size of not larger than a specifically limited size or of amorphous zirconium oxide, and further it is necessary that the amount of stabilizer and the firing temperature are within specifically limited ranges.

In the following description, reference will be made to the accompanying drawings, in which:

Figure 1 is a graph illustrating the relation between the average crystal grain size of zirconia ceramics and the flexural strength thereof before and after a durability test;

Figure 2 is a graph illustrating the relation between the intensity ratio of X-ray diffraction from the plane (200) of the cubic phase to X-ray diffraction from the plane (200) of the tetragonal phase in zirconia ceramics and the flexural strength of the ceramics, and further the relation between the intensity ratio of X-ray diffraction from the plane (200) of the cubic phase to X-ray diffraction from the plane $(11\bar{1})$ of the monoclinic phase in zirconia ceramics and the flexural strength of the ceramics before and after deterioration with lapse of time; and

Figures 3 and 4 are graphs illustrating the relation between the crystallite size of zirconium oxide and the crystal phase of ceramics produced therefrom.

It has been found that, in order to keep a tetragonal crystal phase of zirconia ceramics stable, it is very important that the zirconia ceramics consist of crystal grains having an average grain size of not larger than 2 µm, preferably not larger than 1 µm.

That is, it has been found from an investigation of the relation between the average crystal grain size and the flexural strength of zirconia ceramics by the use of zirconia ceramics of the present invention and conventional zirconia ceramics that, in zirconia ceramics prior to a durability test, the strength of the ceramics does not noticeably decrease even when the average crystal gain size becomes larger than 2 µm as illustrated by the curve A in Figure 1. However, in zirconia ceramics after a durability test, wherein the ceramics are maintained for 1,500 hours within a specifically limited temperature range of 200—300°C, when the average crystal grain size becomes larger than 2 µm, the strength of the ceramics is noticeably decreased as illustrated by the curve B in Figure 1 due to the presence of fine cracks formed therein due to the formation of excess monoclinic phase.

Figure 1 shows the variation rate of the flexural strength of zirconia ceramics before and after a durability test depending upon the average crystal grain size at a specifically limited molar ratio of $Y_2O_3/ZrO_2$. In zirconia ceramics having different molar ratios of $Y_2O_3/ZrO_2$, even when the ceramics have the same crystal grain size, they have different strengths. The measuring method of the strength in the above described experiment is the same as that described in the following Example 1.

The reason why transformation from a tetragonal phase to a monoclinic phase hardly occurs in the case where the crystal grain size is small may be that, when crystal grains have a very fine size, the tetragonal phase is more stable than the monoclinic phase due to the surface free energy of the grains. The fact that the tetragonal phase is stably present within a wide range of from room temperature to high temperature greatly contributes to the improvement of the strength of zirconia ceramics and to the prevention of deterioration in strength with lapse of time. As a result, hysteresis due to the phase transformation does not occur in the thermal expansion curve upon repeated heatings and coolings.

The measurement of the average crystal grain size is carried out in the following manner. A mirror-polished surface of a ceramics is etched with hydrofluoric acid, the number $n$ of grains contained in a certain area S containing at least 50 grains is counted by an electron photomicrograph, and the diameter $d$ of a circle having an area equal to the average area $s$ per one grain is calculated by the formula $d = (4s/\pi)^{1/2}$. The value of $d$ is calculated in at least 3 fields for one sample and the average value is used as the average crystal grain size. The number $n$ of grains is the total sum of the number of grains contained completely in the certain area S and ½ of the number of grains lying on the boundary line defining the area S.

The relation between the intensity ratio of X-ray diffraction from certain planes in zirconia ceramics and the flexural strength of the ceramics is shown in Figure 2. When the intensities of X-ray diffraction from the plane (200) of the tetragonal phase, from the plane $(11\bar{1})$ of the monoclinic phase and from the plane (200) of the cubic phase are represented by T(200), $M(11\bar{1})$ and C(200) respectively, the flexural strength of zirconia ceramics C having a crystal phase consisting essentially of a tetragonal phase, according to the present invention, is higher than the flexural strength D, before deterioration, of conventional zirconia ceramics consisting of a cubic phase and a monoclinic phase, and further the flexural strength of zirconia ceramics E having a mixed crystal phase consisting essentially of a cubic phase and a tetragonal phase, according to the present invention, is higher than the flexural strength F, after deterioration with lapse of time at a temperature within a specifically limited range, of zirconia ceramics consisting of a cubic phase and a monoclinic phase. Further, the zirconia ceramics C and E according to the present invention have a higher strength than zirconia ceramics G having a crystal phase consisting only of a cubic phase, and their strength is increased corresponding to the increase of the content of the tetragonal phase.

The term "zirconia ceramics having a mixed crystal phase comprising a cubic phase and a tetragonal phase" used in this specification means not only zirconia ceramics having a mixed crystal phase consisting only of a cubic phase and a tetragonal phase, but also zirconia ceramics having a mixed crystal phase comprising a cubic phase and a tetragonal phase and containing a monoclinic phase in an amount defined by a condition that the intensity ratio of T(200)/(T(200) + C(200)) is at least 0.5, the intensity ratio of M(11$\bar{1}$)/(T(200) is not more than 1.0 and the intensity ratio of M(11$\bar{1}$)/(T(200) + C(200)) is not more than 0.4. The range of the monoclinic phase defined by the above described intensity ratios of X-ray diffractions at the peak corresponds to not more than about 20% by volume of monoclinic phase based on the total crystal phase. Further, the term "zirconia ceramics having a crystal phase comprising a tetragonal phase" used in this specification means not only zirconia ceramics having a crystal phase consisting only of a tetragonal phase, but also zirconia ceramics having a crystal phase comprising a tetragonal phase and containing at least one of a monoclinic phase and a cubic phase in an amount defined by a condition that the intensity ratio of (M(11$\bar{1}$) + C(200))/T(200) of the X-ray diffraction from the planes is not more than 0.4. The above described range of the intensity ratio of the X-ray diffraction from the planes corresponds to not more than 20% by volume of the content of at least one of monoclinic phase and cubic phase.

Further, the term "zirconia ceramics comprising $ZrO_2$ and $Y_2O_3$" used in the present invention means zirconia ceramics in which $Y_2O_3$ is mainly used as a stabilizer for $ZrO_2$. Not more than about 30 mol% of the $Y_2O_3$ may be replaced by oxides of rare earth elements, such as $Yb_2O_3$, $Sc_2O_3$, $Nd_2O_3$, and $Sm_2O_3$, or by CaO or MgO. The zirconia ceramics of the present invention may contain not more than 30% by weight, based on the total amount of the ceramics, of sintering aids, such as $SiO_2$, $Al_2O_3$, and clay. In the identification of the crystal phase constituting a ceramics, the surface of the ceramics is polished to form a mirror surface, and the crystal phase of the mirror surface is identified by means of X-ray diffractiometry.

When zirconia ceramics having a mixed crystal phase comprising a cubic phase and a tetragonal phase or zirconia ceramics having a crystal phase comprising a tetragonal phase according to the present invention is used in the production of an oxygen concentration cell, all the resulting oxygen concentration cells exhibit an electromotive force equal to the theoretical value. Therefore, the zirconia ceramics of the present invention can also be satisfactorily used as oxygen ion-conductive solid electrolytes.

In the production of the above described zirconia ceramics of the present invention, zirconium oxide to be moulded into an article to be fired into the ceramics is zirconium oxide having a crystallite size of not larger than 100 nm (1,000Å) or amorphous zirconium oxide, and is preferably zirconium oxide having a crystallite size of 300—700Å.

That is, when the relation between the crystallite size of the zirconium oxide to be moulded into an article and the crystal phase of the resulting zirconia ceramics is represented by a relation between the crystallite size and the intensity ratio of X-ray diffractions, zirconium oxide having a crystallite size of not larger than 70 nm (700Å) or amorphous zirconium oxide gives a crystal phase (H-region) comprising a tetragonal phase or a mixed crystal phase (H'-region) comprising a cubic phase and a tetragonal phase to the resulting zirconia ceramics. Zirconium oxide having a crystallite size of 70—100 nm (700—1,000Å) gives a crystal phase (I-region) which is a mixture of the above described tetragonal phase or cubic phase and tetragonal phase with a small amount of monoclinic phase incorporated therein, but zirconium oxide having a crystallite size of larger than 100 nm (1,000Å) gives a crystal phase (J-region) containing a large amount of monoclinic phase as illustrated in Figures 3 and 4.

Zirconium oxide having a crystallite size of 0 μm represents amorphous zirconium oxide. The use of amorphous zirconium oxide may cause excessively large firing shrinkage, and therefore crystalline zirconium oxide is preferably used. Accordingly, it is clear from Figures 3 and 4 that zirconium oxide to be moulded into an article must be zirconium oxide having a crystallite size of not larger than 100 nm (1,000Å) or amorphous zirconium oxide in order to stably maintain the crystal phase of the resulting zirconia ceramics to be a mixed phase comprising a cubic phase and a tetragonal phase or to be a phase comprising a tetragonal phase, both of which phases undergo little deterioration in strength with lapse of time.

Zirconium oxide having a crystallite size of not larger than 100 nm (1,000Å) or amorphous zirconium oxide can be obtained by the thermal decomposition of for example zirconium chloride or zirconium nitrate, but zirconium oxide powder produced by the thermal decomposition of zirconyl hydroxide ($ZrO(OH)_2 \cdot nH_2O$) at a temperature of 200—1,100°C, preferably 500—1,050°C, may be most advantageously used in the present invention. In this case, when the thermal decomposition temperature of zirconyl hydroxide is lower than 200°C, water contained in the zirconyl hydroxide might not be completely removed, while when the temperature exceeds 1,100°C, the resulting zirconium oxide may have a crystallite size of larger than 100 nm (1,000Å). Therefore, a thermal decomposition temperature lower than 200°C or higher than 1,100°C is not preferable.

In the method of producing zirconia ceramics according to the present invention, zirconium oxide is firstly mixed with a yttrium compound in a mixing ratio of $Y_2O_3/ZrO_2$ (molar ratio) of 2/98—7/93. In this case, it is very important in order to give a high resistance against deterioration in strength with lapse of time to the resulting zirconia ceramics that the mixing ratio of the zirconium oxide and an yttrium compound is within the range of 2/98—7/93 calculated as the molar ratio of $Y_2O_3/ZrO_2$. The reason is as follows. When the molar ratio of $Y_2O_3/ZrO_2$ is less than 2/98, the tetragonal phase which is effective for preventing the deterioration in strength with lapse of time is hardly formed. On the other hand, when the molar ratio exceeds 7/93, the tetragonal phase is not substantially formed, but a cubic phase zirconia ceramics is formed. When the molar ratio of $Y_2O_3/ZrO_2$ is within the range of 2/98—4/96, a mixed crystal phase comprising a cubic phase and a tetragonal phase or a crystal phase comprising a tetragonal phase is formed depending upon the combination of the crystallite size of the zirconium oxide with the firing and other conditions.

The yttrium compound is preferably yttrium oxide, yttrium chloride, yttrium nitrate or yttrium oxalate.

The mixture of zirconium oxide and an yttrium compound is moulded into a moulded article having a given shape, for example by means of a rubber press, extrusion, or casting, and the moulded article is fired in air at a temperature within a range of 1,000—1,550°C, preferably within a range of 1,100—1,450°C, in which the highest temperature is maintained for 1—20 hours. In general, when the firing temperature is lower, a longer firing time is more preferable. When the firing temperature is lower than 1,000°C or higher than 1,550°C, a large amount of monoclinic phase is formed, and such a firing temperature is not preferable. When firing is carried out within the temperature range of 1,000—1,550°C, a mixed crystal phase comprising a cubic phase and a tetragonal phase or a crystal phase comprising a tetragonal phase is stably formed.

When a mixture of zirconium oxide powder and an yttrium compound is heated at a temperature of 200—1,200°C for about 1—10 hours to thermally decompose the yttrium compound, and the thermally decomposed mixture is pulverized, for example in a ball mill, a homogeneous mixture of zirconium oxide and yttrium oxide can be obtained. When the mixture is moulded, and the moulded article is fired, a dense ceramics can be obtained. Therefore, the pulverized mixture is advantageously used as a raw material. The particle size of the raw material after pulverizing is about 0.1—10 μm.

The crystallite size of zirconium oxide to be used in the present invention is measured by using CuKα radiation by means of X-ray diffractiometry, and calculated by the formula:

$$D = 0.89\lambda/(B-b)\cos\theta.$$

In the formula:

D is the crystallite size of zirconium oxide,

λ is 1.541Å, which is the wavelength of CuKα radiation,

B is a larger value among the half-value width (radian) of the line profile from the plant $(11\bar{1})$ of the monoclinic phase and that of the line profile from the plane (111) of the tetragonal phase of zirconium oxide,

b is the half-value width (radian) of the line profile from the plane (101) of α-quartz having a crystallite size of at least 300 nm (3,000Å), which is added as an internal standard, and

θ is ½ the value of the diffraction angle 2θ of the X-rays used in the measurement of the half-value width of zirconium oxide.

The invention will be further described with reference to the following illustrative Examples.

## Example 1

$ZrO_2$ and $Y_2O_3$ or their compounds were mixed in a mixing ratio shown in the following Table 1, and the resulting mixture was homogeneously mixed in a ball mill. Then, the mixture was thermally decomposed at 800°C, pulverised in wet state in a ball mill and then dried. The dried powder was press moulded, and the moulded article was fired at a temperature within the range of from 1,000°C to 1,400°C for a period of time of from 1 hour to 3 hours to obtain zirconia ceramics according to the present invention. The average crystal grain size, the intensity ratio of X-ray diffraction, the flexural strength and the volume resistivity of the resulting zirconia ceramics were measured. The intensity radio of X-ray diffraction was expressed by the ratio of heights of X-ray diffraction from the plane (200) of the cubic phase, from the plane (200) of the tetragonal phase and from the plane $(11\bar{1})$ of the monoclinic phase. The flexural strength was measured by the three-point bending method with respect to rod-shaped ceramics samples of size 3.5 × 3.5 × 50 mm prepared from the resulting zirconia ceramics. The volume resistivity was measured at 400°C in the air by the four-terminal method.

The results of the measurements with respect to the resulting zirconia ceramics having various compositions are shown in Table 1. The results of the measurements with respect to zirconia ceramics outside the scope of the present invention are also shown in Table 1 as comparative samples (Nos. 19—23).

TABLE 1(a) – 1

| No. | Molar ratio of stabilizer/ $ZrO_2$ calculated as oxide | Composition of stabilizer | Kind of sintering aid | 1) Addition amount of sintering aid (wt %) | 2) Main crystal phase | 3) $\frac{T(200)}{T(200) + C(200)}$ | 4) $\frac{M(11\bar{1}) + C(200)}{T(200)}$ |
|---|---|---|---|---|---|---|---|
| 1 | 2/98 | $Y_2O_3$ | not added | 0 | T | 1 | 0.05 |
| 2 | 2/98 | ,, | clay | 10 | T | 1 | 0.32 |
| 3 | 3/97 | ,, | not added | 0 | T | 1 | 0 |
| 4 | 3/97 | ,, | not added | 0 | T | 0.88 | 0.16 |
| 5 | 3/97 | $Y_2O_3$ 75 mol %<br>$Yb_2O_3$ 25 mol % | not added | 0 | T | 0.76 | 0.38 |
| 6 | 3.5/96.5 | $Y_2O_3$ | alumina | 5 | T | 0.84 | 0.34 |
| 7 | 4/96 | ,, | not added | 0 | T | 0.75 | 0.37 |
| 8 | 3/97 | ,, | alumina | 5 | T+C | 0.78 | 0.47 |
| 9 | 4/96 | ,, | not added | 0 | T+C | 0.68 | 0.54 |
| 10 | 4/96 | $Y_2O_3$ 90 mol %<br>Ca 10 mol % | | 0 | T+C | 0.62 | 0.79 |
| 11 | 4/96 | $Y_2O_3$ | clay | 10 | T+C | 0.67 | 1.0 |
| 12 | 4.5/95.5 | ,, | not added | 0 | T+C | 0.56 | 0.86 |
| 13 | 5/95 | ,, | clay | 10 | C+T | 0.40 | 2.3 |
| 14 | 5/95 | ,, | alumina | 20 | C+T | 0.32 | 2.9 |
| 15 | 5/95 | ,, | not added | 0 | C+T | 0.30 | 2.3 |
| 16 | 6/94 | ,, | alumina | 5 | C+T | 0.20 | 4.6 |

TABLE 1(a) – 2

| No. | $\frac{M(11\bar{1})}{T(200)}$ | $\frac{M(11\bar{1})}{T(200)+C(200)}$ | Average crystal grain size (μm) | Flexural strength ($kg/mm^2$) | 5) Flexural strength after durability test ($kg/mm^2$) | Volume resistivity (KΩ.cm) |
|---|---|---|---|---|---|---|
| 1 | 0.05 | 0.05 | 0.2 | 97 | 94 | 98 |
| 2 | 0.32 | 0.32 | 1.8 | 108 | 87 | 109 |
| 3 | 0 | 0 | 0.2 | 112 | 110 | 91 |
| 4 | 0.02 | 0.02 | 0.3 | 76 | 75 | 80 |
| 5 | 0.06 | 0.05 | 0.5 | 59 | 57 | 90 |
| 6 | 0.15 | 0.12 | 1.0 | 65 | 66 | 92 |
| 7 | 0.03 | 0.02 | 0.4 | 58 | 59 | 84 |
| 8 | 0.19 | 0.15 | 1.0 | 60 | 58 | 97 |
| 9 | 0.08 | 0.05 | 0.4 | 55 | 53 | 73 |
| 10 | 0.16 | 0.10 | 0.5 | 51 | 49 | 82 |
| 11 | 0.50 | 0.33 | 1.8 | 53 | 46 | 92 |
| 12 | 0.06 | 0.03 | 0.4 | 49 | 47 | 66 |
| 13 | 0.83 | 0.33 | 1.8 | 46 | 37 | 57 |
| 14 | 0.69 | 0.22 | 1.6 | 44 | 36 | 132 |
| 15 | 0.06 | 0.02 | 0.3 | 41 | 40 | 67 |
| 16 | 0.67 | 0.15 | 1.0 | 36 | 34 | 46 |

TABLE 1(b) – 1

| No. | Molar ratio of stabilizer/ $ZrO_2$ calculated as oxide | Composition of stabilizer | Kind of sintering aid | 1) Addition amount of sintering aid (wt %) | 2) Main crystal phase | 3) $\frac{T(200)}{T(200) + C(200)}$ | 4) $\frac{M(11\bar{1}) + C(200)}{T(200)}$ |
|---|---|---|---|---|---|---|---|
| 17 | 6/94 | $Y_2O_3$ | not added | 0 | C+T | 0.09 | 10 |
| 18 | 7/93 | ,, | not added | 0 | C+T | 0.05 | 18 |
| 19 | 1.5/98.5 | ,, | not added | 0 | M | M alone | M alone |
| 20 | 8/92 | ,, | not added | 0 | C | C alone | C alone |
| 21 | 3/97 | ,, | clay | 10 | T+C+M | 0.68 | 1.4 |
| 22 | 2/98 | ,, | clay | 10 | T+M | 1 | 2.5 |
| 23 | 5/95 | ,, | clay | 5 | C+M | 0 | T is absent |

TABLE 1(b) – 2

| No. | $\frac{M(11\bar{1})}{T(200)}$ | $\frac{M(11\bar{1})}{T(200)+C(200)}$ | Average crystal grain size ($\mu m$) | Flexural strength ($kg/mm^2$) | 5) Flexural strength after durability test ($kg/mm^2$) | Volume resistivity ($K\Omega.cm$) |
|---|---|---|---|---|---|---|
| 17 | 0.15 | 0.01 | 0.4 | 32 | 32 | 58 |
| 18 | 0.4 | 0.02 | 0.4 | 27 | 28 | 42 |
| 19 | M alone | M alone | 0.3 | $<1$ | broken | measurement is impossible |
| 20 | C alone | C alone | 0.5 | 13 | 14 | 21 |
| 21 | 0.89 | 0.60 | 3.0 | 51 | broken | 103 |
| 22 | 2.5 | 2.5 | 3.0 | 56 | broken | 110 |
| 23 | T is absent | 0.48 | 10 | 50 | broken | 88 |

Note: 1) Wt. % of sintering aid based on the total weight of ceramics

2) T: tetragonal phase, C: cubic phase, M: monoclinic phase

3) C(200): intensity of X-ray diffraction from the plane (200) of cubic phase

T(200): intensity of X-ray diffraction from the plane (200) of tetragonal phase

4) $M(11\bar{1})$: intensity of X-ray diffraction from the plane $(11\bar{1})$ of monoclinic phase

5) Flexural strength after repeating heating and cooling between 200°C and 300°C at temperature raising and lowering rates of 10°C/min for 1,500 hours.

Example 2

Zirconium oxide and an yttrium compound were mixed in a ball mill in a mixing ratio shown in the following Table 2. The resulting mixture was, directly or after thermal decomposition under the condition described in Table 2, pulverized in a wet state together with a sintering aid in a ball mill and then dried. The dried mixture was press moulded, and the moulded article was fired at a temperature shown in Table 2 to obtain a ceramics. The average crystal grain size of the resulting ceramics, the intensity ratio of the tetragonal phase, the cubic phase and the monoclinic phase in the ceramics and the flexural strength of the ceramics were measured in the same manner as described in Example 1. The crystallite size of zirconium oxide was measured by the use of a mixture to be moulded into a moulded article. In Table 2 also, zirconia ceramics outside the scope of the present invention are shown as comparative samples (Nos. 24—28).

TABLE 2(a) – 1

| No. | Crystallite size of zirconium oxide (nm) | Molar ratio of stabilizer/ $ZrO_2$ calculated as oxide | Kind of stabilizer indicated by oxide | Kind of stabilizer | Kind of sintering aid | 3) Addition amount of sintering aid (wt %) |
|---|---|---|---|---|---|---|
| 1 | 21.5 | 2/98 | $Y_2O_3$ | $Y_2O_3$ | alumina | 5 |
| 2 | 32 1) | 2/98 | ,, | $YCl_3$ | not added | 0 |
| 3 | 35 1) | 3/97 | ,, | $Y_2O_3$ | clay | 10 |
| 4 | 43 1) | 3/97 | ,, | $YCl_3$ | not added | 0 |
| 5 | 8 1) | 4/96 | ,, | $Y_2O_3$ | not added | 0 |
| 6 | 21.5 | 4/96 | ,, | $YCl_3$ | not added | 0 |
| 7 | 42 1) | 4/96 | $Y_2O_3$ 90 mol %<br>$Yb_2O_3$ 10 mol % | $Y_2O_3$<br>$Yb_2O_3$ | not added<br>not added | 0<br>0 |
| 8 | 68 | 4/96 | $Y_2O_3$ | $Y(NO_3)_3$ | not added | 0 |
| 9 | 73 | 4/96 | ,, | $YCl_3$ | alumina | 5 |
| 10 | 97 1) | 4/96 | ,, | $YCl_3$ | clay | 5 |
| 11 | 32 1) | 5/95 | ,, | $Y(NO_3)_3$ | not added | 0 |
| 12 | 42 1) | 5/95 | ,, | $Y_2(C_2O_4)_3$ | clay | 20 |
| 13 | 55 | 5/95 | ,, | $Y_2O_3$ | silica | 5 |
| 14 | 46 1) | 5/95 | $Y_2O_3$ 80 mol %<br>CaO 20 mol % | $Y_2O_3$<br>CaO | alumina | 5 |
| 15 | 45 1) | 5/95 | $Y_2O_3$ | $Y_2O_3$ | not added | 0 |
| 16 | 41 1) | 5/95 | ,, | $Y(NO_3)_3$ | not added | 0 |
| 17 | 32 1) | 6/94 | ,, | $YCl_3$ | clay | 3 |

TABLE 2(a) – 2

| No. | Thermal decomposition, tem. × time (°C) (hr.) | Firing, tem. × time (°C) (hr.) | 4) $\frac{T(200) + C(200)}{T(200) + C(200) + M(11\bar{1})}$ | Average crystal grain size (μm) | Flexural strength (kg/mm²) | Flexural strength after durability test (kg/mm²) |
|---|---|---|---|---|---|---|
| 1 | not effected | 1,200°C × 15 hr. | 0.98 | 0.3 | 98 | 90 |
| 2 | 800°C × 5 hr. | 1,400°C × 5 hr. | 0.91 | 0.8 | 96 | 87 |
| 3 | not effected | 1,200°C × 5 hr. | 0.93 | 0.3 | 87 | 81 |
| 4 | 1,000°C × 3 hr. | 1,400°C × 5 hr. | 0.92 | 0.7 | 101 | 92 |
| 5 | not effected | 1,100°C × 10 hr. | 0.89 | 0.2 | 75 | 75 |
| 6 | not effected | 1,200°C × 10 hr. | 1.0 | 0.3 | 69 | 66 |
| 7 | 800°C × 5 hr. | 1,300°C × 5 hr. | 0.97 | 0.5 | 63 | 61 |
| 8 | 1,000°C × 2 hr. | 1,400°C × 5 hr. | 0.91 | 0.9 | 65 | 62 |
| 9 | 700°C × 2 hr. | 1,400°C × 2 hr. | 0.96 | 0.8 | 59 | 55 |
| 10 | 1,000°C × 2 hr. | 1,500°C × 1 hr. | 0.86 | 1.4 | 60 | 53 |
| 11 | 800°C × 3 hr. | 1,020°C × 20 hr. | 0.78 | 0.2 | 48 | 46 |
| 12 | 250°C × 2 hr. | 1,250°C × 5 hr. | 0.96 | 0.3 | 41 | 42 |
| 13 | 800°C × 5 hr. | 1,120°C × 10 hr. | 0.75 | 0.2 | 43 | 40 |
| 14 | 1,000°C × 2 hr. | 1,380°C × 5 hr. | 0.95 | 0.7 | 39 | 39 |
| 15 | not effected | 1,450°C × 3 hr. | 0.76 | 1.0 | 45 | 41 |
| 16 | 1,200°C × 1 hr. | 1,530°C × 2 hr. | 0.72 | 1.8 | 47 | 39 |
| 17 | 900°C × 3 hr. | 1,300°C × 5 hr. | 0.91 | 0.4 | 37 | 35 |

TABLE 2(b) – 1

| No. | Crystallite size of zirconium oxide (mm) | Molar ratio of stabilizer/ $ZrO_2$ calculated as oxide | Kind of stabilizer indicated by oxide | Kind of stabilizer | Kind of sintering aid | 3) Addition amount of sintering aid (wt %) |
|---|---|---|---|---|---|---|
| 18 | 77 | 6/94 | $Y_2O_3$ | $YCl_3$ | not added | 0 |
| 19 | 16 | 7/93 | ,, | $Y(NO_3)_3$ | alumina | 3 |
| 20 | 44 1) | 7/93 | ,, | $Y_2O_3$ | clay | 10 |
| 21 | amorphous | 4/96 | ,, | $Y_2O_3$ | not added | 0 |
| 22 | amorphous 1) | 5/95 | ,, | $Y(NO_3)_3$ | alumina | 3 |
| 23 | 38 2) | 5/95 | ,, | $YCl_3$ | clay | 5 |
| 24 | 42 | 1.5/98.5 | $Y_2O_3$ | $Y_2O_3$ | not added | 0 |
| 25 | 42 | 8/92 | ,, | $Y_2O_3$ | not added | 0 |
| 26 | 108 | 3/97 | ,, | $YCl_3$ | clay | 5 |
| 27 | 32 | 5/95 | ,, | $YCl_3$ | ,, | 5 |
| 28 | 45 | 5/95 | ,, | $YCl_3$ | ,, | 5 |

TABLE 2(b) – 2

| No. | Thermal decomposition, tem. × time (°C) (hr.) | Firing, tem. × time (°C) (hr) | 4) $\frac{T(200) + C(200)}{T(200) + C(200) + M(11\bar{1})}$ | Average crystal grain size (μm) | Flexural strength (kg/mm²) | Flexural strength after durability test (kg/mm²) |
|---|---|---|---|---|---|---|
| 18 | 1,200°C × 1 hr. | 1,400°C × 2 hr. | 0.88 | 0.5 | 38 | 37 |
| 19 | not effected | 1,250°C × 5 hr. | 1.0 | 0.3 | 29 | 30 |
| 20 | 700°C × 1 hr. | 1,020°C × 20 hr. | 0.74 | 0.2 | 28 | 27 |
| 21 | not effected | 1,100°C × 10 hr. | 0.95 | 0.2 | 71 | 73 |
| 22 | not effected | 1,200°C × 5 hr. | 1.0 | 0.3 | 47 | 46 |
| 23 | 700°C × 1 hr. | 1,240°C × 5 hr. | 0.98 | 0.3 | 45 | 45 |
| 24 | not effected | 1,200°C × 5 hr. | (M alone) | 0.3 | <1 | broken |
| 25 | not effected | 1,400°C × 5 hr. | 1.0 (C alone) | 1.1 | 13 | 14 |
| 26 | 800°C × 5 hr. | 1,300°C × 5 hr. | 0.13 | 2.2 | 51 | broken |
| 27 | ,, | 900°C × 15 hr. | 0.62 | 0.1 | 31 | broken |
| 28 | ,, | 1,600°C × 2 hr. | 0.59 | 3.1 | 34 | broken |

Note: 1) Zirconium oxide obtained by the thermal decomposition of zirconyl hydroxide.

2) Zirconium oxide and yttrium oxide were mixed by coprecipitating them by adding ammonia to aqueous solution containing zirconium chloride and yttrium chloride.

3) Wt. % of sintering aid based on the total weight of ceramics.

4) C(200): intensity of X-ray diffraction from the plant (200) of cubic phase
T(200): intensity of X-ray diffraction from the plane (200) of tetragonal phase
M(11$\bar{1}$): intensity of X-ray diffraction from the plane (11$\bar{1}$) of monoclinic phase

It can be seen from Tables 1 and 2 that the zirconia ceramics according to the present invention have a high strength, undergo little deterioration in strength due to use for a long period of time, and have a low volume resistivity.

As described above, the zirconia ceramics according to the present invention, which consist of crystal grains having a mixed phase comprising a cubic phase and a tetragonal phase or having a phase comprising a tetragonal phase, which crystal grains have a particle size of not larger than 2 µm, have a high strength, undergo little deterioration in strength with lapse of time within the specifically limited temperature range of 200—300°C, and are free from the variation in their dimensions due to heat treatment. Therefore, the zirconia ceramics of the present invention may be advantageously used as industrial materials which are required to have a high strength and a high thermal resistance, for example solid electrolytes for oxygen concentration cells, machine parts for internal combustion engines, thermistors and cutting tools.

**Claims**

1. A zirconia ceramics including sintering aid and consisting of

$ZrO_2$ and $Y_2O_3$ in a molar ratio of $Y_2O_3/ZrO_2$ in the range of 2/98—7/93, in which up to about 30 mol% of the $Y_2O_3$ may be replaced by oxides of rare earth elements or by CaO or MgO and the crystal grains of which have a mixed crystal phase comprising a tetragonal phase and cubic phase or have a phase comprising a tetragonal phase, the average grain size of said crystal grains being not larger than 2 µm,

an amount which is not more than 30% by weight, based on the total weight of the ceramics of a sintering aid selected from $Al_2O_3$, $SiO_2$ and clay.

2. A zirconia ceramics as claimed in claim 1 wherein the molar ratio of $Y_2O_3/ZrO_2$ is in the range of 2/98—4/96 and the crystal grains have a phase comprising tetragonal phase.

3. A method of producing zirconia ceramics, comprising the steps of providing zirconium oxide having a crystallite size not larger than 100 nm or amorphous zirconium oxide, mixing said zirconium oxide with an yttrium compound in a molar mixing ratio, calculated as oxide, of $Y_2O_3/ZrO_2$ of 2/98—7/93, wherein up to about 30 mol% of the $Y_2O_3$ may be replaced by oxides of rare earth elements or by CaO or MgO, and further including a sintering aid selected from $Al_2O_3$, $SiO_2$ or clay in an amount of not more than 30% by weight based on the total amount of the ceramics, moulding the mixture into a moulded article, and firing the moulded article at a temperature within the range of 1,000—1,550°C, thereby to obtain a zirconia ceramics in which the crystal grains have a mixed crystal phase comprising a tetragonal phase and a cubic phase or have a phase comprising a tetragonal phase, the average size of said grains being not larger than 2 µm.

4. A method as claimed in claim 3, wherein said zirconium oxide is powder produced by the thermal decomposition of zirconyl hydroxide at a temperature of 200 to 1,100°C.

5. A method as claimed in any one of claims 3 to 4 wherein the said zirconium oxide is mixed with a solution of said yttrium compound, the resulting mixture is heated at a temperature of 200—1,200°C to thermally decompose the yttrium compound, the thermal decomposition product is pulverised, and the resulting powder is moulded into the said moulded article.

**Patentansprüche**

1. Zirkoniumkeramik, welche eine Sinterhilfe einschliesst und aus

$ZrO_2$ und $Y_2O_3$ in einem Molverhältnis von $Y_2O_3/ZrO_2$ im Bereich von 2/98 bis 7/93, wobei bis zu 30 Mol.% des $Y_2O_3$ durch Oxide von seltenen Erdelementen oder durch CaO oder MgO ersetzt sein können und die Kristallkörner davon eine Mischkristallphase, umfassend eine tetragonale Phase und eine kubische Phase, haben oder eine Phase haben, die eine tetragonale Phase aufweist, wobei die Durchschnittskorngrösse der Kristallkörner nicht grösser als 2 µm ist;

und einer Menge, die nicht mehr als 30%, bezogen auf das Gesamtgewicht des Keramikgewichtes, ausmacht, einer Sinterhilfe, ausgewählt aus $Al_2O_3$, $SiO_2$ und Ton, besteht.

2. Zirkoniumkeramik gemäss Anspruch 1, in welcher das Molverhältnis von $Y_2O_3/ZrO_2$ im Bereich von 2/98 bis 4/96 liegt und die Kristallkörner eine eine tetragonale Phase umfassende Phase haben.

3. Verfahren zur Herstellung von Zirkoniumkeramik, umfassend die Stufen:

Zurverfügungstellen von Zirkoniumoxid mit einer Kristallitgrösse von nicht mehr als 100 nm oder von amorphem Zirkoniumoxid, Mischen des Zirkoniumoxides mit Yttriumoxid in einem molaren Mischverhältnis, berechnet als Oxid, von $Y_2O_3/ZrO_2$ von 2/98 bis 7/93, wobei bis zu 30 Mol.% des $Y_2O_3$ durch Oxide von seltenen Erdelementen oder durch CaO oder MgO ersetzt sein können, und das weiterhin eine Sinterhilfe, ausgewählt aus $Al_2O_3$, $SiO_2$ oder Ton, in einer Menge von nicht mehr als 30 Gew.%, bezogen auf das Gesamtgewicht der Keramik, einschliesst;

Verformen der Mischung zu einem Formkörper; und

Brennen des Formkörpers bei einer Temperatur im Bereich von 1000 bis 1550°C unter Erhalt einer Zirkoniumkeramik, in welcher die Kristallkörner eine gemischte Kristallphase aufweisen, die eine tetragonale Phase und eine kubische Phase umfassen oder eine Phase haben, die eine tetragonale Phase umfasst, wobei die Durchschnittskorngrösse nicht mehr als 2 µm beträgt.

4. Verfahren gemäss Anspruch 3, in welcher das Zirkoniumoxid ein Pulver ist, welches durch thermische Zersetzung von Zirkonylhydroxid bei einer Temperatur von 200 bis 1100°C hergestellt wurde.

5. Verfahren gemäss einem der Ansprüche 3 bis 4, bei welchem das Zirkoniumoxid mit einer Lösung des Yttriumoxids vermischt wird, die erhaltene Mischung unter thermischer Zersetzung des Yttriumoxids auf eine Temperatur von 200 bis 1200°C erhitzt wird, das thremische Zersetzungsprodukt pulverisiert wird und das erhaltene Pulver zu dem Formkörper geformt wird.

**Revendications**

1. Céramique en zircone comprenant un adjuvant de frittage et consistant en:

$ZrO_2$ et $Y_2O_3$ dans un rapport molaire de $Y_2O_3/ZrO_2$ dans le plage de 2/98—7/93, où jusqu'à environ 30% en moles du $Y_2O_3$ peuvent être remplacés par des oxydes d'éléments de terres rares ou par CaO ou MgO, et dont les grains cristallins ont une phase cristalline mixte comprenant une phase tétragonale et une phase cubique ou ont une phase comprenant une phase tétragonale, la dimension moyenne de grain desdits grains cristallins ne dépassant pas 2 µm,

une quantité qui n'est pas supérieure à 30% en poids, sur la base du poids total de la céramique, d'un adjuvant de frittage choisi parmi $Al_2O_3$, $SiO_2$ et l'argile.

2. Céramique en zircone selon la revendication 1, dans laquelle le rapport molaire $Y_2O_3/ZrO_2$ se situe dans la plage de 2/98—4/96 et les grains cristallins ont une phase comprenant une phase tétragonale.

3. Procédé de production de céramique en zircone, comprenant les étapes consistant à prendre de l'oxyde de zirconium ayant une dimension de cristallite ne dépassant pas 100 nm ou de l'oxyde de zirconium amorphe, à mélanger ledit oxyde de zirconium avec un composé d'yttrium dans un rapport molaire de mélange, calculé en oxyde, de $Y_2O_3/ZrO_2$ de 2/98—7/93, où jusqu'à environ 30% en moles de $Y_2O_3$ peuvent être remplacés par des oxydes d'éléments de terres rares ou par CaO ou MgO, et comprenant en outre un adjuvant de frittage choisi parmi $Al_2O_3$, $SiO_2$ ou l'argile en une quantité ne dépassant pas 30% en poids sur la base du poids total de la céramique, à mouler le mélange pour former un article moulé, et à cuire l'article moulé à une température se situant dans la plage de 1000—1550°C, pour obtenir ainsi une céramique en zircone dans laquelle les grains cristallins ont une phase cristalline mixte comprenant une phase tétragonale et une phase cubique ou ont une phase comprenant une phase tétragonale, la dimension moyenne desdits grains ne dépassant pas 2 µm.

4. Procédé selon la revendication 3, dans lequel ledit oxyde de zirconium est une poudre produite par la décomposition thermique de l'hydroxyde de zirconyle à une température de 200 à 1100°C.

5. Procédé selon l'une des revendications 3 et 4, dans lequel on mélange ledit oxyde de zirconium avec une solution dudit composé d'yttrium, on chauffe le mélange résultant à une température de 200—1200°C pour décomposer thermiquement le composé d'yttrium, on pulvérise le produit de décomposition thermique, et on moule la poudre résultante pour former ledit article moulé.

FIG.1

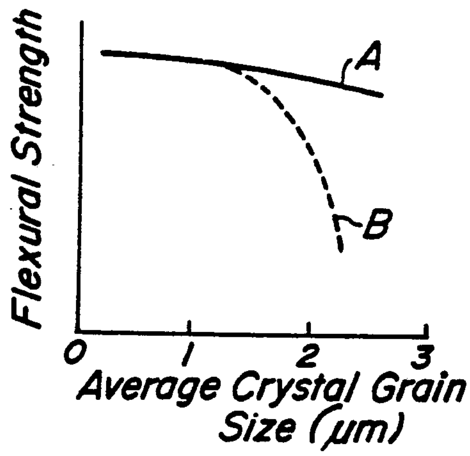
Flexural Strength
A
B
0
1
2
3
Average Crystal Grain
Size (μm)

FIG.2

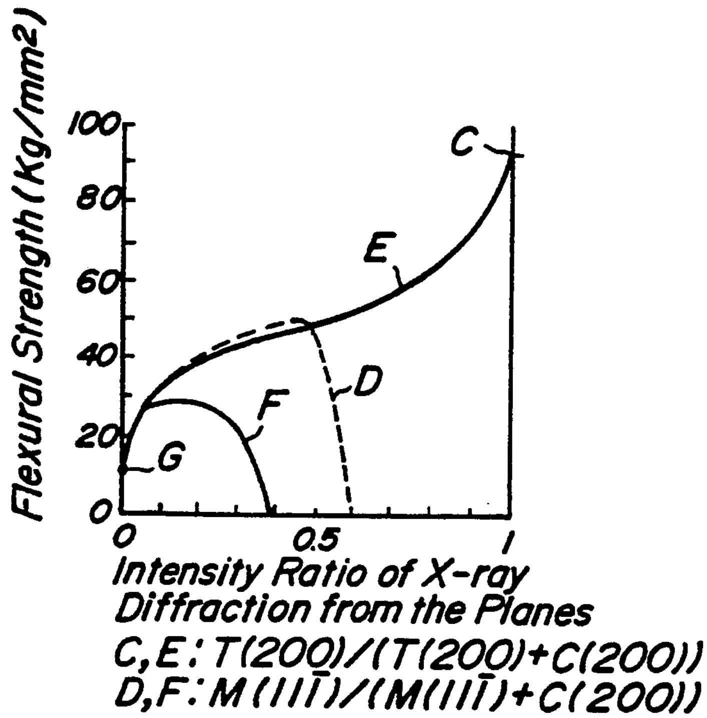
Flexural Strength (Kg/mm2)
100
80
60
40
20
0
C
E
D
F
G
0
0.5
1
Intensity Ratio of X-ray
Diffraction from the Planes
C,E: T(200)/(T(200)+C(200))
D,F: M(11Ī)/(M(11Ī)+C(200))

FIG_3

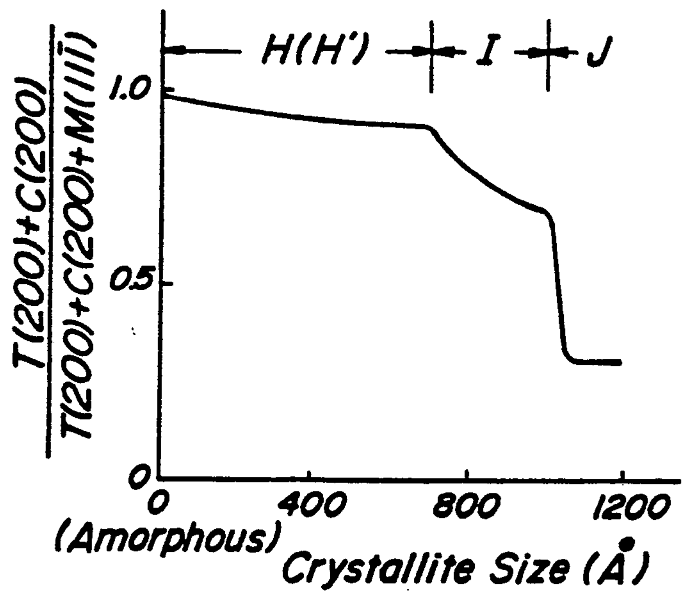
T(200)+C(200) / T(200)+C(200)+M(111̄)
H(H')
I
J
1.0
0.5
0
0
400
800
1200
(Amorphous)
Crystallite Size (Å)

FIG_4

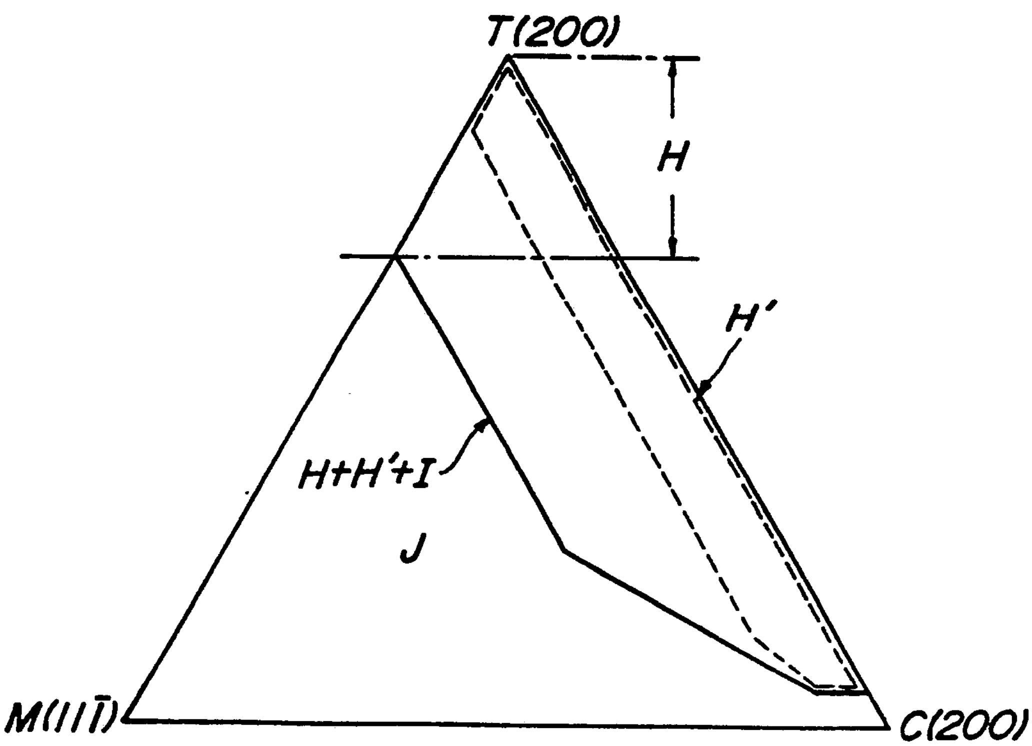
T(200)
H
H'
H+H'+I
J
M(111̄)
C(200)